Europäisches Patentamt

European Patent Office

Office européen des brevets

(19)

(11) Veröffentlichungsnummer: **0 077 538**
B1

(12) # EUROPÄISCHE PATENTSCHRIFT

(45) Veröffentlichungstag der Patentschrift:
25.09.85

(51) Int. Cl.⁴: **H 01 M 10/39**

(21) Anmeldenummer: **82109547.8**

(22) Anmeldetag: **15.10.82**

(54) **Elektrochemische Speicherzelle.**

(30) Priorität: **21.10.81 DE 3141697**

(43) Veröffentlichungstag der Anmeldung:
**27.04.83 Patentblatt 83/17**

(45) Bekanntmachung des Hinweises auf die Patenterteilung:
**25.09.85 Patentblatt 85/39**

(84) Benannte Vertragsstaaten:
**BE FR GB IT NL**

(56) Entgegenhaltungen:
**DE - A - 2 400 202**
**FR - A - 2 231 121**
**FR - A - 2 292 346**
**GB - A - 1 530 273**

(73) Patentinhaber: **BROWN, BOVERI & CIE
Aktiengesellschaft, Kallstadter Strasse 1,
D-6800 Mannheim 31 (DE)**

(72) Erfinder: **Langpape, Reinhart, Dr. Dipl. Phys., in der
Hohl 23, D-6901 Schönau-Altneudorf (DE)**

(74) Vertreter: **Kempe, Wolfgang, Dr. et al, c/o Brown, Boveri
& Cie AG Postfach 351, D-6800 Mannheim 1 (DE)**

## Beschreibung

Die Erefindung bezieht sich auf eine elektrochemische Speicherzelle gemäss dem Oberbegriff des Patentanspruches 1.

Solche wiederaufladbaren elektrochemischen Speicherzellen mit Festelektrolyten eignen sich sehr gut zum Aufbau von Akkumulatoren hoher Energie- und Leistungsdichte. Die in den Alkali/Chalkogen-Speicherzellen verwendeten Festelektrolyten, die beispielsweise aus Beta-Aluminiumoxid gefertigt sind, zeichnen sich dadurch aus, dass die Teilleitfähigkeit des beweglichen Ions sehr hoch und die Teilleitfähigkeit der Elektronen um vielfache Zenerpotenzen kleiner ist. Durch die Verwendung solcher Festelektrolyten für den Aufbau von elektrochemischen Speicherzellen wird erreicht, dass praktisch keine Selbstentladung stattfindet, da die Elektronenleitfähigkeit vernachlässigbar ist, und ihre Reaktionssubstanzen auch nicht als neutrale Teilchen durch den Festelektrolyten gelangen können.

Ein spezielles Beispiel huerfür sind solche wiederaufladbaren elektrochemischen Speicherzellen auf der Basis von Natrium/Schwefel, die einen Festelektrolyten aus Beta-Aluminiumoxid besitzen. Ein Vorteil dieser elektrochemischen Speicherzellen besteht darin, dass beim Laden keine elektrochemischen Nebenreaktionen auftreten. Der Grund dafür ist wiederum, dass nur Natriumionen durch den Festelektrolyten gelangen können. Die Stromausbeute einer solchen Natrium/Schwefel-Speicherzelle liegt daher etwa bei 100%. Bei diesen elektrochemischen Speicherzellen ist das Verhältnis von Energieinhalt zum Gesamtgewicht einer solchen Speicherzelle im Vergleich zum Bleiakkumulator sehr hoch, da die Reaktionsstoffe leicht sind und bei der elektrochemischen Reaktion viel Energie frei wird. Elektrochemische Speicherzellen auf der Basis von Natrium und Schwefel besitzen also gegenüber konventionellen Akkumulatoren, wie den Bleiakkumulatoren, erhebliche Vorteile.

Um eine optimale Funktionsweise dieser Natrium/Schwefel-Speicherzellen zu erzielen, muss sichergestellt sein, dass diese Speicherzellen einen niedrigen Innenwiderstand aufweisen. Um dies bei Natrium/Schwefel-Speicherzellen zu erreichen, ist es erforderlich, dass der Festelektrolyt beidseitig von jeweils einem der beiden Reaktanden lückenlos benetzt bzw. bedeckt wird.

In der DE-PS 2 400 202 ist eine elektrochemische Speicherzelle beschrieben, die einen becherförmigen Festelektrolyten aufweist, dessen Innenraum als Anodenraum dient. Im inneren des Festelektrolyten ist ein Edelstahlgewebe angeordnet. Dieses Gewebe ist in definiertem Abstand von dem Festelektrolyten angeordnet. Zwischen der Oberfläche des Gewebes und dem Festelektrolyten wird durch diese Massnahme ein Kapillarbereich geschaffen, der sich bis in den Vorratsbehälter des Alkalimetalls erstreckt. Durch die damit gebildete Kapillarstruktur wird erreicht, dass das Alkalimetall über die gesamte anodenseitige aktive Oberfläche des Festelektrolyten verteilt wird.

Von Nachteil ist bei dieser Anordnung, dass der Transport des Alkalimetalls vom Vorratsbehälter zur Festelektrolytoberfläche und von dort wieder zurück in den Vorratsbehälter nur innerhalb der Kapillarstruktur erfolgen kann. Mit zunehmendem Alter der Speicherzelle besteht hierbei die Gefahr, dass die Transportwirkung der Kapillarstruktur durch Verunreinigungen verschlechtert wird. Dadurch wird die Oberflächebenetzung des Festelektrolyten gemindert, wodurch es zu einem Anstieg des Innenwiderstandes der Speicherzelle und damit zu einem Nachlassen ihrer Funktionsfähigkeit kommen kann.

In der GB-PS 1 530 273 ist eine elektrochemische Speicherzelle beschrieben, die auf der Basis von Natrium und Schwefel arbeitet. Die Speicherzelle wird nach aussenhin durch ein becherförmiges Gehäuse begrenzt, in dessen Innenraum ein ebenfalls becherförmiger Festelektrolyt angeordnet ist. Im innenraum des Festelektrolyten ist der schwefelhaltige Kathodenraum angeordnet, während sich zwischen dem Gehäuse der Speicherzelle und dem Festelektrolyten der Anodenraum befindet. Um bei einem Bruch des Festelektrolyten das Zusammenfliessen von grossen Mengen an Natrium und Schwefel zu vermeiden, ist der Festelektrolyt von einem gewellten becherförmigen Rohr umgeben, dessen Innenflächen an definierten Stellen an den Festelektrolyten angrenzen. Hierdurch werden ringförmige Bereiche um den Festelektrolyten gebildet, die ebenso wie der übrige Anodenraum mit einem porösen Material ausgefüllt und mit Natrium getränkt sind. Die Mantelflächen des gewellten Rohres sind mit Öffnungen versehen, so dass das Natrium von dem äusseren Bereich des Anodenraums in die ringförmigen Bereiche des Anodenraums, die direkt an den Festelektrolyten angrenzen, eintreten kann.

Der Erfindung liegt die Aufgabe zugrunde eine Natrium/Schwefel-Speicherzelle zu schaffen, bei der ein optimaler Transport des Natriums vom Vorratsbehälter zur Oberfläche des Festelektrolyten und zurück dauerhaft sichergestellt und eine lückenlose Benetzung der gesamten Elektrolytoberfläche im Bereich des Anodenraums auch bei zunehmendem Alter der Speicherzelle aufrechterhalten wird.

Diese Aufgabe wird erfindungsgemäss durch die kennzeichnenden Merkmale des Patentanspruches 1 gelöst.

Jede Verbreiterung der Kapillarstruktur wird durch eine von Festelektrolyten wegweisende Aufwölbung der Kapillarstruktur gebildet. Der die Verbreiterung durchsetzende Kanal ist vorzugsweise im Zentrum der Verbreiterung angeordnet. Der Kanal ist innen hohl. Seine innere Begrenzung wird durch ein Metallnetz gebildet. Der Kanal erstreckt sich über die gesamte Länge der Verbreiterung. Jede Verbreiterung der Kapillarstruktur und der in ihr verlaufende Kanal werden so geführt, dass die Eintrittsöffnung des Kanals direkt an die Austrittsöffnung des Natriumvorratsbehälters angrenzt. Erfindungsgemäss fliesst das Natrium vom Vorratsbehälter in den Kanal. Es wird in diesem Kanals entlang des gesamten Festelektrolyten transportiert. Da die Mantelfläche des Kanals durch ein Metallnetz gebildet wird, kann das Natrium an jeder beliebigen Stelle aus dem Kanal aus- und in die Kapillarstruktur hineinfliessen und von dort zur Oberfläche des Festelektrolyten gelangen. Dadurch wird sichergestellt, dass jede Stelle auf der Oberfläche des Festelektrolyten von dem Natrium dauerhaft benetzt wird. Durch die Verwendung des Kanals kann eine grössere Menge Natrium ständig entlang des Festelektrolyten transportiert werden. Eine Verstopfung des Kanals ist praktisch ausgeschlossen. Durch die zahlreichen Öffnungen, die der Kanal besitzt, kann immer eine genügend grosse Menge an Natrium in die Kapillarstruktur eindringen. Ein Verstopfen der Austrittsöffnungen des Kanals ist ebenfalls auszuschliessen. Der Rückfluss des nicht benötigten Natriums in den Vorratsbehälter wird durch den Kanal ebenfalls sichergestellt. Durch die erfindungsgemässe Einrichtung wird erreicht, dass immer die jeweils erforderliche Menge an Natrium an der Oberfläche des Festelektrolyten zur Verfügung steht. Es wird jedoch auch gewährleistet, dass bei einem Bruch des Festelektrolyten das Zusammenfliessen von grösseren Mengen Natrium mit dem Schwefel unterbunden wird, da wie bereits erwähnt, nur so viel Natrium an der Oberfläche des Festelektrolyten vorhanden ist, wie für seine Benetzung unbedingt erforderlich ist. Erfindungsgemäss ist die Kapillarstruktur von einem Stützelement umgeben. Das Stützelement ist auf der dem Festelektrolyten abgewandten Seite der Kapillarstruktur angeordnet. Dieses Stützelement liegt eng an der Kapillarstruktur an und erstreckt sich über die gesamte Länge der Kapillarstruktur. Vorzugsweise ist das Stützelement als Rohr ausgebildet. Sein Querschnitt ist an den Querschnitt der Kapillarstruktur angepasst. Das Stützelement weist an den Stellen, an denen die Kapillarstruktur mit einer Verbreiterung versehen ist, eine nach aussen gerichtete Auswölbung zur Aufnahme dieser Verbreiterung auf. Die Auswölbung ist so ausgebildet, dass sie die Auswölbung der Kapillarstruktur eng umschliesst. Das Rohr, das das Stützelement bildet, wird vorzugsweise aus Aluminium oder einer Aluminiumlegierung hergestellt.

Befindet sich der Anodenraum im Inneren des Festelektrolyten, so dient der Innenraum des als Stützelement um die Kapillarstruktur angeordneten Rohres gleichzeitig als Natriumvorratsbehälter. Befindet sich dagegen der Anodenraum zwischen dem äusseren Metallgehäuse der Speicherzelle und dem Festelektrolyten, so wird das Stützelement als einseitig geschlossenes Rohr ausgebildet, das die Kapillarstruktur ebenfalls eng umschliesst. Gleichzeitig dient dieses einseitig geschlossene Rohr bei dieser Ausführungsform als Metallgehäuse der Speicherzelle. In diesem Fall wird das Rohr vorzugsweise aus einem Edelstahl hergestellt.

Die Erfindung wird nachfolgend anhand von Zeichnungen erläutert.

Es zeigen:

Fig. 1 eine inverse Natrium/Schwefel-Speicherzelle im Vertikalschnitt,

Fig. 2 eine Natrium/Schwefel-Speicherzelle, bei der der Anodenraum im Inneren des Festelektrolyten angeordnet ist, im Vertikalschnitt.

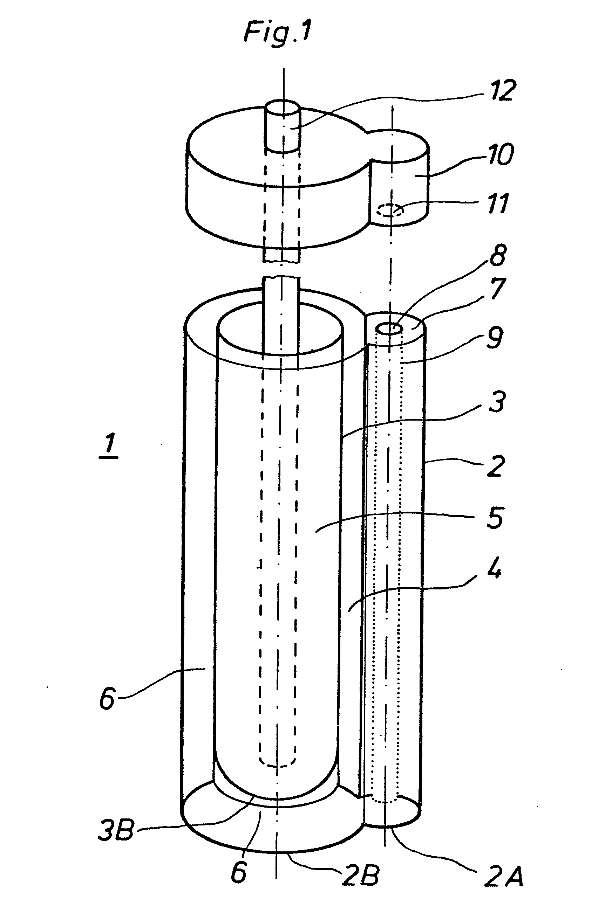

Die in Fig. 1 dargestellte elektrochemische Speicherzelle 1 wird im wesentlichen aus einem becherförmigen Gehäuse 2 und einem Festelektrolyten 3 gebildet. Das becherförmige Gehäuse 2 ist aus Metall gefertigt und gegen Korrosion geschützt. Der Festelektrolyt 3 wird aus Beta-Aluminiumoxid hergestellt. Der Festelektrolyt 3 ist ebenfalls becherförmig ausgebildet und im Inneren des metallischen Gehäuses 2 angeordnet. Die Abmessungen des Festelektrolyten 3 sind so gewählt, dass zwischen seinen Aussenflächen und den Innenflächen des metallischen Gehäuses 2 ein zusammenhängender Zwischenraum 4 gebildet wird, der bei dieser Ausführungsform als Anodenraum 4 dient. Der Innenraum des Festelektrolyten 3 wird als Kathodenraum 5 genutzt. Er ist mit einem Graphitfilz ausgefüllt, der mit Schwefel getränkt ist. Der zwischen dem metallischen Gehäuse 2 und dem Festelektrolyten 3 gebildete Raum 4 dient, wie bereits oben erwähnt, als Anodenraum. Die Aussenfläche des Festelektrolyten ist von einer Kapillarstruktur 6 umgeben. Dies liegt eng am Festelektrolyten an und erstreckt sich über seine gesamte Länge. Die Verbreiterung 7 wird durch eine konvexe Auswölbung des kapillaren Materials gebildet. Sie ist so ausgebildet, dass sie vom Festelektrolyten wegweist. Die Auswölbung erstreckt sich über die gesamte Länge des Festelektrolyten 3. Im Zentrum der Auswölbung 7 ist ein Kanal 8 angeordnet, der parallel zur Längsachse der Speicherzelle 1 verläuft. Die Auswölbung 7 ist in ihrer gesamten Länge von dem Kanal 8 durchsetzt. Der Kanal 8 ist innen vollständig hohl. Seine Mantelfläche wird durch ein Mantelnetz 9 gebildet. Auf der Aussenseite wird die Kapillarstruktur 6 von dem metallischen Gehäuse 2 der Speicherzelle 1 umgeben. Bei dieser Ausführungsform übernimmt das Gehäuse 2 gleichzeitig die Funktion des Stützelementes, mit dem die Kapillarstruktur 6 erfindungsgemäss umgeben sein kann. Der Querschnitt des metallischen Gehäuses 2 ist an den Querschnitt der Kapillarstruktur 6 angepasst. Insbesondere weist das metallische Gehäuse 2 an der Stelle, an der sich die Auswölbung 7 der Kapillarstruktur 6 befindet, ebenfalls eine nach aussen gerichtete Auswölbung 2A auf. Die Abmessung dieser Auswölbung 2A ist so bemessen, dass sie die Auswölbung 7 der Kapillarstruktur 6 vollständig aufnehmen kann und eng an dieser anliegt. Zwischen dem Boden 3B des Festelektrolyten und dem Boden 2B des metallischen Gehäuses 2 ist ebenfalls kapillaraktives Material angeordnet. Der Festelektrolyt 3 ist auf diesem kapillaraktiven Material 6 aufgesetzt und abgestützt.

Die Dicke des kapillaraktiven Material 6, das zwischen dem Boden 3B des Festelektrolyten 3 und dem metallischen Gehäuse 2 angeordnet ist, wird so gewählt, dass das obere Ende des Festelektrolyten etwa in einer Ebene mit dem oberen Ende des metallischen Gehäuses 2 liegt. Damit kann ein sicherer Verschluss der gesamten Speicherzelle nach aussen hin und der beiden Reaktandenräume gegeneinander erzielt werden. Der Verschluss der Speicherzelle 1 ist bei dem hier schematisch dargestellten Ausführungsbeispiel nicht gezeigt. Es handelt sich hierbei auch um kein erfindungswesentliches Merkmal.

Die in Fig. 1 dargestellte Speicherzelle 1 verfügt zusätzlich über einen Vorratsbehälter 10 für das Natrium. Dieser ist über der eigentlichen Speicherzelle 1 angeordnet. Er bildet gleichzeitig den Verschluss der Speicherzelle 1 nach aussen und ist deshalb fest mit ihr verbunden. Der Querschnitt des Vorratsbehälters ist an den Querschnitt des metallischen Gehäuses 2 angepasst. Es handelt sich um einen im im wesentlichen vollständig verschlossenen Behälter, der lediglich im Bereich des Anodenraumes 4 eine Austrittsöffnung 11 für das Natrium aufweist. Diese Austrittsöffnung 11 ist so angeordnet, dass sie über der Eintrittsöffnung des Kanales 8 liegt. Die Verbreiterung 7, insbesondere die Auswölbung der Kapillarstruktur 6 ist soweit nach oben geführt, dass der in ihrem Zentrum verlaufende Kanal direkt an den Vorratsbehälter 10 angrenzt. Der Anodenraum 4 enthält neben der Kapillarstruktur 6 das als anodischer Reaktand dienende Natrium. Bei der Entladung der Speicherzelle wird ein Teil dieses Natriums, das sich im Anodenraum 4 befindet verbraucht. Damit die Oberfläche des Festelektrolyten 3 ständig und lückenlos von dem Natrium benetzt wird, fliesst dieses aus dem Vorratsbehälter 10 nach, so dass die jeweils verbrauchte Menge ersetzt wird. Der Transport des Natriums aus dem Vorratsbehälter 10 erfolgt über den Kanal 8. Wie bereits oben erwähnt wird die Mantelfläche des Kanals 8 durch ein Metallnetz 9 gebildet. Dieses weist so viele Öffnungen auf, dass überall so viel Natrium aus dem Kanal in die Kapillarstruktur 6 fliessen kann. Damit wird sichergestellt, dass jede Stelle auf der Oberfläche des Festelektrolyten ständig mit Natrium benetzt ist. Als anodischer Stromabnehmer dient das metallische Gehäuse 2. Die Funktion des kathodischen Stromabnehmers übernimmt ein Metallstab 12, der den Vorratsbehälter 10 durchsetzt und tief in den Festelektrolyten 3 hineinragt. Der Stromabnehmer 12 ist im Bereich des Vorratsbehälters 10 gegen diesen elektrisch isoliert. Der Metallstab 12 ist so angeordnet, dass er geringfügig über den Vorratsbehälter 10 übersteht.

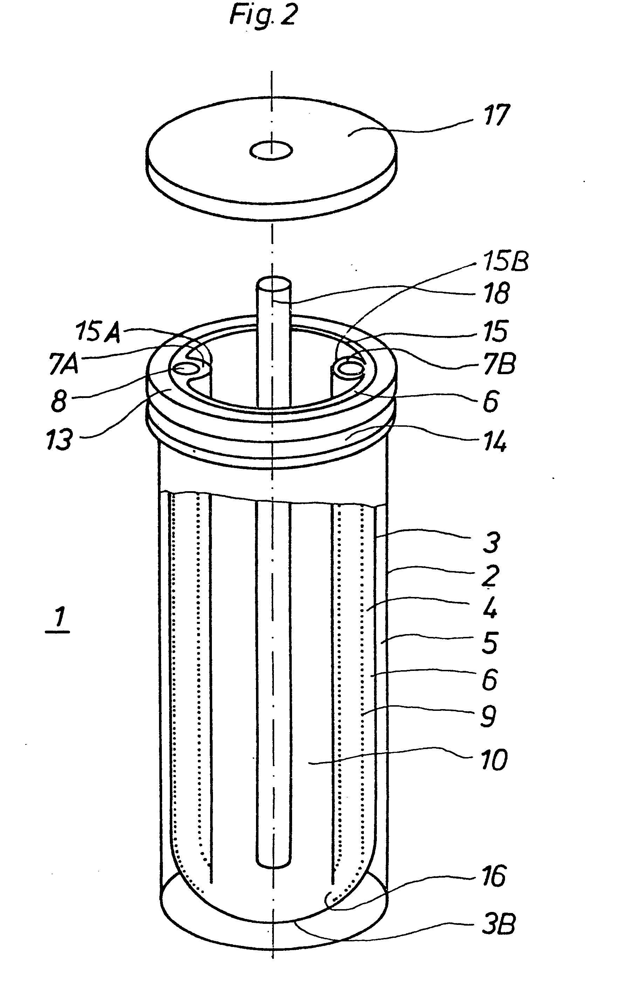

Fig. 2 zeigt eine elektrochemische Speicherzelle 1, die wiederum durch ein becherförmiges Gehäuse 2 und einen ebenfalls becherförmig ausgebildeten Festelektrolyten 3 gebildet wird. Das becherförmige Gehäuse 2 ist auch hierbei aus Metall hergestellt. Der Festelektrolyt 3 ist aus Beta-Aluminiumoxid gefertigt. Das Innere des Festelektrolyten 3 dient als Anodenraum 4. Die Abmessungen des Festelektrolyten 3 sind so gewählt, dass zwischen den Innenflächen des metallischen Gehäuse 2 und den Aussenflächen des Festelektrolyten 3 ein rundum zusammenhängender Zwischenraum 5 gebildet wird. Dieser dient bei dem hier gezeigten Ausführungsbeispiel als Kathodenraum. Der Festelektrolyt 3 ist an seinem oberen Ende mit einem Isolierkörper 13 verbunden. Vorzugsweise wird der Isolierkörper 13 über ein Glaslot am Festelektrolyten 3 befestigt. Der Isolierkörper 13 ist so ausgebildet, dass er über dem Festelektrolyten 3 nach aussen übersteht und einen Flansch bildet. Der Isolierkörper 13 wird vorzugsweise aus Alpha-Aluminiumoxid hergestellt. Das metallische Gehäuse 2 ist an seinem oberen Ende mit einem nach innen und aussen weisenden Flansch 14 versehen. Auf diesem Flansch 14 ist der mit dem Festelektrolyt 3 verbundene Isolierkörper 13 aufgesetzt und abgestützt. Vorzugsweise wird zwischen dem Isolierkörper 13 und dem Flansch 14 eine zusätzliche Dichtung (hier nicht dargestellt) angeordnet. Wie bereits oben erwähnt ist im Innenraum des Festelektrolyten 3 der Anodenraum 4 angeordnet. An den inneren Begrenzungsflächen des Festelektrolyten 3 liegt eine Kapillarstruktur 6 fest an. Die Kapillarstruktur 6 weist bei der hier gezeigten Ausführungsform zwei Verbreiterungen 7A und 7B auf, ansonsten ist sie im wesentlichen überall gleich dick. Bei den beiden Verbreiterungen 7A und 7B handelt es sich auch hierbei um je eine Auswölbung der Kapillarstruktur. Die beiden Auswölbungen 7A und 7B sind dem Innenbereich des Festelektrolyten 3 zugewandt. Die beiden Auswölbungen 7A und 7B erstrecken sich über die gesamte Länge der Kapillarstruktur 6. Diese wiederum ist vom oberen bis zum unteren Ende des Festelektrolyten 3 geführt. Die Auswölbung 7A weist einen U-förmigen Querschnitt auf. Die Auswölbung 7B ist so ausgebildet, dass sie einen zylinderförmigen Querschnitt aufweist. Beide Auswölbungen 7A und 7B weisen in ihren Inneren einen Kanal 8 auf. Beide Kanäle 8 erstrecken sich über die gesamte Länge der Verbreiterungen 7A und 7B. Sie verlaufen zu der Längsachse der Speicherzelle 1 parallel. Beide Kanäle 8 sind auch bei diesem Ausführungsbeispiel innen vollständig hohl. Ihre Mantelflächen werden durch je ein Metallnetz 9 gebildet.

Die beiden Kanäle 8 haben auch bei diesem Ausführungsbeispiel die Aufgabe, den Transport des Natriums vom Vorratsbehälter 10 entlang des gesamten Festelektrolyten 3 zu übernehmen. Da ihre Mantelflächen ebenfalls durch ein Metallnetz 9 gebildet werden, weisen sie eine ausreichende Menge an Öffnungen auf, durch die Natrium aus den Kanälen 8 in die Kapillarstruktur 6 fliessen kann, das von dort auf die Oberfläche des Festelektrolyten 3 geleitet wird. Der Rückstand des Natriums in den Vorratsbehälter geschieht in umgekehrter Weise. Die Form der Auswölbungen 7A und 7B, nimmt keinen Einfluss auf den Transport des Natriums innerhalb der Kanäle. Vielmehr soll anhand der unterschiedlichen Ausführungsformen der Auswölbungen 7A und 7B gezeigt werden, dass die Verbreiterungen der Kapillarstruktur 6 nicht an eine bestimmte Ausführungsform gebunden sind, sondern bei Bedarf an die jeweiligen Gegebenheiten angepasst werden können. Die Kapillarstruktur 6 ist auch bei dem hier gezeigten Ausführungsbeispiel auf der dem Festelektrolyten 3 abgewandten Seite von einem Stützelement 15 umgeben. Das Stzützelement 15 ist als Rohr ausgebildet. Im Bereich der beiden Auswölbungen 7A und 7B der Kapillarstruktur 6 weist auch das Stützelement 15 Auswölbungen 15A und 15B auf, die dem Innenbereich des Festelektrolyten 3 zugewandt sind. Die Form dieser Auswölbungen 15A und 15B ist an die Form der Auswölbungen 7A und 7B angepasst, so dass sie diese aufnehmen können und fest umschliessen. Der übrige Bereich des Stützelementes 15 ist ebenfalls so ausgebildet, dass es fest an der Kapillarstruktur 6 anliegt. Die Länge des Stützelementes 15 ist so bemessen, dass es sich über die gesamte Länge der Kapillarstruktur 6 erstreckt. Das Stützelement 15 ist aus Aluminium oder einer Aluminiumlegierung hergestellt, gegen Korrosion geschützt, und wie bereits oben erwähnt, als Rohr ausgebildet. Der Innenraum des Stützelementes 15 dient bei dem hier gezeigten Ausführungsbeispiel als Vorratsbehälter 10 für das Natrium. Das Stützelement 15 ist bis zum oberen Ende des Festelektrolyten 3 geführt. Zwischen dem Boden 3B des Festelektrolyten 3 und dem unteren Ende des Stützelementes 15 ist ein schmaler, freier Zwischenraum 16 vorgesehen. An diesen grenzen die Eintrittsöffnungen der beiden Kanäle 8 direkt an, so dass das Natrium aus dem Vorratsbehälter 10 direkt in die Kanäle 8 geleitet wird.

Der Vercshluss der Speicherzelle 1 wird durch eine Deckplatte 17 gebildet, die auf dem Isolierkörper 13 aufliegt und mit diesem fest verbunden ist. Vorzugsweise wird auch hierbei zwischen dem Isolierkörper 13 und der Deckplatte 17 eine Dichtung (hier nicht dargestellt) angeordnet.

Als kathodischer Stromabnehmer dient bei dieser Ausführungsform das metallische Gehäuse 2. Der anodische Stromabnehmer 18 wird durch einen Metallstab 18 gebildet, der weit in den Festelektrolyten 3 hineinragt. Er durchsetzt die Deckplatte 17, mit der er über eine Isolierung (hier nicht dargestellt) verbunden ist. Der Metallstab 18 wird so angeordnet, dass er über die Deckplatte 17 einige Millimeter übersteht.

**Patentansprüche**

1. Elektrochemische Speicherzelle auf der Basis von Alkalimetall und Chalkogen mit mindestens einem für die Aufnahme des Anolyten bestimmten Anodenraum (4) und einem für die Aufnahme des Katholyten bestimmten Kathodenraum (5), welche durch einen alkaliionenleitenden Festelektrolyten (3) voneinander getrennt sind, wobei der Festelektrolyt (3) im Bereich des Anodenraums (4) wenigstens über die gesamte für die elektrochemische Reaktion genutzte Oberfläche von einer Kapillarstruktur (6) umgeben ist, dadurch gekennzeichnet, dass die Kapillarstruktur (6) mindestens eine Verbreiterung (7, 7A, 7B) aufweist, die von wenigstens einem Kanal (8) durchsetzt ist, der mindestens bereichsweise über wenigstens eine Öffnung mit der Kapillarstruktur (6) in Verbindung steht, und dass sich jede Verbreiterung (7, 7A, 7B) der Kapillarstruktur (6) mindestens über die gesamte für die elektrochemische Reaktion genutzte Länge des Festelektrolyten (3) erstreckt.

2. Elektrochemische Speicherzelle nach Anspruch 1, dadurch gekennzeichnet, dass jede Verbreiterung (7, 7A, 7B) der Kapillarstruktur (6) durch eine von der Oberfläche des Festelektrolyten (3) wegweisende Auswölbung der Kapillarstruktur (6) gebildet ist.

3. Elektrochemische Speicherzelle nach einem der Ansprüche 1 oder 2, dadurch gekennzeichnet, dass jeder Kanal (8) im Zentrum der Verbreiterung (7, 7A, 7B) angeordnet ist.

4. Elektrochemische Speicherzelle nach Anspruch 1 bis 3, dadurch gekennzeichnet, dass die Mantelfläche eines jeden Kanals (8) durch korrosionsbeständiges Metallnetz (9) gebildet ist.

5. Elektrochemische Speicherzelle nach Anspruch 1 bis 4, dadurch gekennzeichnet, dass sich jeder Kanal (8) über die gesamte Länge der Verbreiterung (7, 7A, 7B) erstreckt.

6. Elektrochemische Speicherzelle nach Anspruch 1 bis 5, dadurch gekennzeichnet, dass die Kapillarstruktur (6) mindestens auf der dem Festelektrolyten (3) abgewandten Seite von wenigstens einem Stützelement (2, 15) umgeben ist.

7. Elektrochemische Speicherzelle nach Anspruch 6, dadurch gekennzeichnet, dass jedes Stützelement (2, 15) als Rohr ausgebildet ist.

8. Elektrochemische Speicherzelle nach Anspruch 6 oder 7, dadurch gekennzeichnet, dass der Querschnitt des Stützelementes (2) an den Aussenquerschnitt der Kapillarstruktur (6) angepasst ist.

9. Elektrochemische Speicherzelle nach Anspruch 6 oder 7, dadurch gekennzeichnet, dass der Querschnitt des Stützelementes (15) an den Innenquerschnitt der Kapillarstruktur (6) angepasst ist.

10. Elektrochemische Speicherzelle nach Anspruch 6 bis 9, dadurch gekennzeichnet, dass das Stützelement (2, 15) mindestens die gleiche Länge wie die Kapillarstruktur (6) aufweist.

11. Elektrochemische Speicherzelle nach einem der Ansprüche 6, 7, 9 und 10, dadurch gekennzeichnet, dass der Innenraum des Stützelementes (15) den Vorratsbehälter (19) für das Natrium bildet.

12. Elektrochemische Speicherzelle nach Anspruch 11, dadurch gekennzeichnet, dass das Stützelement (15) aus Aluminium oder einer Aluminiumlegierung gefertigt ist.

13. Elektrochemische Speicherzelle nach einem der Ansprüche 6, 7, 8 und 10, dadurch gekennzeichnet, dass das Stützelement (2) durch das metallische Gehäuse der Speicherzelle (1) gebildet ist.

14. Elektrochemische Speicherzelle nach Anspruch 13, dadurch gekennzeichnet, dass das Stützelement (2) aus Stahl gefertigt ist.

15. Elektrochemische Speicherzelle nach Anspruch 6 bis 14, dadurch gekennzeichnet, dass die Stützelemente (2, 15) mit einem Korrosionsschutz versehen sind.

**Claims**

1. Electrochemical storage cell based on alkali metal and chalkogen with at least one anode region (4) intended for receiving the anolyte and one cathode region (5) intended for receiving the catholyte, which regions are separated from each other by a solid electrolyte (3) which conducts alkali ions, the solid electrolyte (3) in the area of the anode region (4) being surrounded by a capillary structure (6) over the entire surface area used for the electrochemical reaction, characterised in that the capillary structure (6) exhibits at least one width enlargement (7, 7A, 7B) which is penetrated by at least one channel (8) which is connected, at least in some areas, with the capillary structure via at least one opening, and that each width enlargement (7, 7A, 7B) of the capillary structure (6) extends at least over the entire length of the solid electrolyte (3) used for the electrochemical reaction.

2. Electrochemical storage cell according to Claim 1, characterised in that each width enlargement (7, 7A, 7B) of the capillary structure (6) is formed by a protuberance of the capillary structure (6) which points away from the surface of the solid electrolyte (3).

3. Electrochemical storage cell according to one of the Claims 1 or 2, characterised in that each channel (8) is disposed in the centre of the width enlargement (7, 7A, 7B).

4. Electrochemical storage cell according to Claim 1 to 3, characterised in that the casing surface of each channel (8) is formed by a corrosion-resistant metal grid (9).

5. Electrochemical storage cell according to Claim 1 to 4, characterised in that each channel (8) extends over the entire lenght of the width enlargement (7, 7A, 7B).

6. Electrochemical storage cell according to Claim 1 to 5, characterised in that the capillary structure (6) is surrounded at least on the side facing away from the solid electrolyte (3) by at least one support element (2, 15).

7. Electrochemical storage cell according to Claim 6, characterised in that each support element (2, 15) is constructed as a tube.

8. Electrochemical storage cell according to Claim 6 or 7, characterised in that the cross section of the support element (2) is matched to the outer cross section of the capillary structure (6).

9. Electrochemical storage cell according to Claim 6 or 7, characterised in that the cross section of the support element (15) is matched to the internal cross section of the capillary structure (6).

10. Electrochemical storage cell according to Claim 6 to 9, characterised in that the support element (2, 15) has at least the same lenght as the capillary structure (6).

11. Electrochemical storage cell according to one of the Claims 6, 7, 9 and 10, characterised in that the inner chamber of the support element (15) forms the reservoir (10) for the sodium.

12. Electrochemical storage cell according to Claim 11, characterised in that the support element (15) is made of aluminium or of an aluminium alloy.

13. Electrochemical storage cell according to one of the Claims 6, 7, 8 and 10, characterised in that the support element (2) is formed by the metal casing of the storage cell (1).

14. Electrochemical storage cell according to Claim 13, characterised in that the support element (2) is made of steel.

15. Electrochemical storage cell according to Claim 6 to 14, characterised in that the support elements (2, 15) are provided with a corrosion protection.


**Revendications**

1. Elément d'accumulateur électrochimique utilisant un couple métal alcalin-chalcogène, avec au moins un compartiment anodique (4) destiné à recevoir l'anolyte et un compartiment cathodique (5) destiné à recevoir le catholyte, séparés par un électrolyte solide (3) conduisant les ions alcalins, l'électrolyte solide (3) étant, dans la zone du compartiment anodique (4), entouré d'une structure capillaire (6) sur au moins la totalité de la surface utilisée pour la réaction électrochimique, caractérisé en ce que la structure capillaire (6) présente au moins un élargissement (7, 7A, 7B) traversé par au moins un canal (8) qui est au moins en partie en communication avec la structure capillaire (6) par l'intermédiaire d'au moins une ouverture, et que chaque élargissement (7, 7A, 7B) de la structure capillaire (6) s'étend au moins sur la totalité de la longueur de l'électrolyte solide (3) utilisée pour la réaction électrochimique.

2. Elément d'accumulateur électrochimique selon la revendication 1, caractérisé en ce que chaque élargissement (7, 7A, 7B) de la structure capillaire (6) est formé par un bombement de la structure capillaire (6) s'éloignant de la surface de l'électrolyte solide (3).

3. Elément d'accumulateur électrochimique selon la revendication 1 ou 2, caractérisé en ce que chaque canal (8) est disposé au centre de l'élargissement (7, 7A, 7B).

4. Elément d'accumulateur électrochimique selon l'une des revendications 1 à 3, caractérisé en ce que la surface extérieure de chaque canal (8) est formée par un réseau métallique (9) résistant à la corrosion.

5. Elément d'accumulateur électrochimique selon l'une des revendications 1 à 4, caractérisé en ce que chaque canal (8) s'étend sur la totalité de la longueur de l'élargissement (7, 7A, 7B).

6. Elément d'accumulateur électrochimique selon l'une des revendications 1 à 5, caractérisé en ce que la structure capillaire (6) est entourée au moins sur son côté opposé à l'électrolyte solide (3) par au moins un élement de support (2, 15).

7. Elément d'accumulateur électrochimique selon la revendication 6, caractérisé en ce que chaque élément de support (2, 15) est réalisé en forme de tube.

8. Elément d'accumulateur électrochimique selon la revendication 6 ou 7, caractérisé en ce que la section de l'élément de support (2) est adaptée à la section extérieure de la structure capillaire (6).

9. Elément d'accumulateur électrochimique selon la revendication 6 ou 7, caractérisé en ce que la section de l'élément de support (15) est adaptée à la section intérieure de la structure capillaire (6).

10. Elément d'accumulateur électrochimique selon l'une des revendications 6 à 9, caractérisé en ce que l'élément de support (2, 15) a une longueur au moins égale à celle de la structure capillaire (6).

11. Elément d'accumulateur électrochimique selon l'une des revendications 6, 7, 9 et 10, caractérisé en ce que l'espace intérieur de l'élément de support (15) constitue le réservoir de stockage (10) du sodium.

12. Elément d'accumulateur électrochimique selon la revendication 11, caractérisé en ce que l'élément de support (15) est réalisé en aluminium ou en un alliage d'aluminium.

13. Elément d'accumulateur électrochimique selon l'une des revendications 6, 7, 8 et 10, caractérisé en ce que l'élément de support (2) est formé par le boîtier métallique de l'élément (1) d'accumulateur.

14. Elément d'accumulateur électrochimique selon la revendication 13, caractérisé en ce que l'élément de support (2) est réalisé en acier.

15. Elément d'accumulateur électrochimique selon l'une des revendications 6 à 14, caractérisé en ce que les éléments de support (2, 15) sont munis d'une protection contre la corrosion.

*Fig.1*

# Fig. 2